# EUROPEAN PATENT APPLICATION

(11) **EP 4 582 359 A1**
(43) Date of publication of application: **09.07.2025**
(21) Application number: 24188866.8
(22) Date of filing: 16.07.2024
(51) Int. Cl.: B65G 17/46, B65G 17/48, B65G 17/44

(54) **A CONVEYING DEVICE**

(30) Priority: 08.01.2024 CN 202410026225
(71) Applicant: Global Manufacturing Partners Holdings Limited, Kowloon Bay Kowloon (HK)
(72) Inventor: CHIU, Wilson, Kowloon (HK)
(74) Representative: Valet Patent Services Limited

(57) **Abstract**

The present invention discloses a conveying device that uses a movable blocking element to block the forward movement of the internal part/component in the front end workpiece, so that the internal part/component cannot move forward. When the movable blocking element swings from top to bottom, it does not obstruct the setting of the movable blocking element and the internal part/component moving backward. Therefore, it is convenient to not obstruct the backward movement of the front end workpiece and has good practicality; The setting of the front left and right avoidance slots and the rear left and right avoidance slots facilitates the external mechanical arm to avoid the front and rear guide slots when clamping and placing workpieces.

## Description

### CROSS-REFERENCE TO RELATED APPLICATIONS

This application claims the benefit and priority of Chinese patent application No. 202410026225.8, filed on January 08, 2024, disclosure of which is hereby incorporated by reference in its entirety.

### TECHNICAL FIELD

This invention relates to a conveying device.

### BACKGROUND

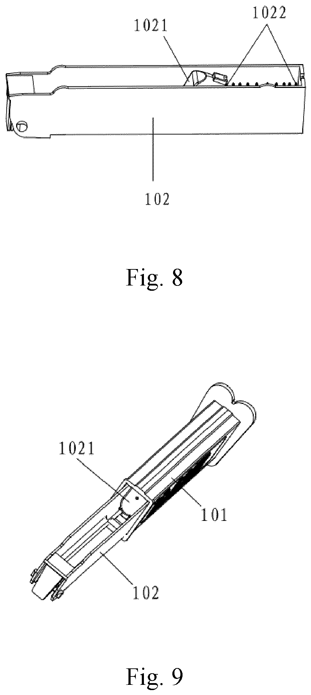

As shown in FIGs. 8 and 9, when inserting a front workpiece 102, which contains an internal component 1021 and a spring 1022, into a rear workpiece 101, if the internal component 1021 is not pressed towards the spring 1022, it is not guaranteed to reach the designated area within the rear workpiece 101 during the continuous insertion process. Current technologies primarily require manual pressure to be applied to the internal component 1021 towards the spring 1022 before manually inserting the front workpiece 102 with the internal component 1021 and spring 1022 into the rear workpiece 101. This is inconvenient for mechanized production and does not enhance work efficiency.

Existing technology guide slots only limit the external contour of the workpiece without restricting the internal parts/components, which is not suitable for certain applications. As illustrated in FIGs. 8 and 9, it is inconvenient to limit the internal component 1021 within the front workpiece 102 before it is inserted into the rear workpiece 101, necessitating a solution to this problem.

### SUMMARY

This invention overcomes the deficiencies of the existing technologies by providing a conveying device designed to achieve the following objectives through a series of technical solutions:

A conveying device comprising a body 4 and a limit seat body 1. The body 4 is equipped with a conveying mechanism 5 for lateral movement of the limit seat body 1. The upper end of the limit seat body 1 is recessed with forward and backward guiding slots 11. The rear end of these slots 11 has a rear stop part 12 to prevent rearward movement of the rear workpiece 101 positioned above it. At the front end of the guiding slots 11, a connecting mechanism 2 is attached, which allows a movable stop component 3 to swing back and forth between the front upper side and the rear lower side around a horizontal axis 21 and to return to the front upper side. The limit seat body 1 has a first limit wall 13 to limit the forward upper movement and a second limit wall 14 to limit the rearward lower movement of the movable stop component 3. The movable stop component 3 can block the forward movement of the internal part/component 1021 of the front workpiece 102 located at the front end of the guiding slots 11. When the movable stop component 3 swings from the front upper side to the rear lower side, it does not obstruct the rearward movement of itself or the internal part/component 1021. The body 4 is connected with an upper stop component 6 positioned above the travel path of the limit seat body 1 to hinder movement between the front and rear ends of the guiding slots 11. The upper end of the limit seat body 1 is further concave with a front left and right avoidance groove 15 intersecting with the front and rear guide grooves 11, and a rear left and right avoidance groove 16 intersecting with the front and rear guide grooves 11.

In an embodiment of the present disclosure, the connecting mechanism 2 includes a first horizontal axle hole 22 on the outer wall of the limit seat body 1 and a corresponding second horizontal axle hole 23 on the outer wall of the movable stop component 3. The horizontal axis 21 passes through these axle holes to swing-connect the movable stop component 3 at the front end of the guiding slots 11.

In an embodiment of the present disclosure, the center of gravity of the movable stop component 3 allows it to return to the forward upper swinging position, or the connecting mechanism 2 includes a torsion spring for driving the movable stop component 3 to reset to the forward upper position.

In an embodiment of the present disclosure, wherein the conveying mechanism 5 is an up and down circulating conveying mechanism, and the limit seat body 1 is fixed on several of the conveying mechanisms 5.

This invention offers the following benefits:
1. The structure of the conveying device is simple and easy to implement. The conveying mechanism on the body facilitates lateral movement of the limit seat body, thereby moving the workpieces laterally; the forward and backward guiding slots and the rear stop part on the limit seat body facilitate forward and rearward guidance and rear positioning, such as when the front workpiece is inserted into the rear workpiece, enhancing practicality. The setup of the movable stop component and the first and second limit walls allows the front workpiece to be placed downward into the guiding slots at the movable stop component, where the movable stop component can block the forward movement of the internal part/component in the front workpiece, preventing it from moving forward. This setup, in conjunction with the upper stop component, helps better limit the front workpiece; additionally, the swing of the movable stop component from the front upper side to the rear lower side does not hinder the rearward movement of itself and the internal part/component, thereby facilitating unobstructed rearward movement of the front workpiece. The setting of the front left and right avoidance slots and the rear left and right avoidance slots facilitates the external mechanical arm to avoid the workpiece when clamping the front and rear guide slots.

### BRIEF DESCRIPTION OF DRAWINGS

FIG. 1 is a first structural diagram of the present disclosure;
FIG. 2 is a second structural diagram of the present disclosure;
FIG. 3 is a third structural diagram of the present disclosure;
FIG. 4 is a fourth structural diagram of the present disclosure;
FIG. 5 is a fifth structural diagram of the present disclosure;
FIG. 6 is a sixth structural diagram of the present disclosure;
FIG. 7 is a seventh structural diagram of the present disclosure;
FIG. 8 is a eighth structural diagram of the present disclosure;
FIG. 9 is a ninth structural diagram of the present disclosure.

### DETAILED DESCRIPTION OF ILLUSTRATIVE EMBODIMENTS

The following examples further detail the features of the invention and other related aspects to aid understanding by those skilled in the art:

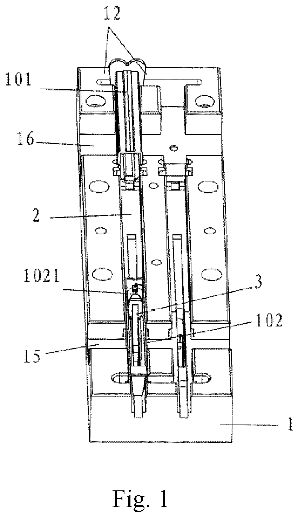

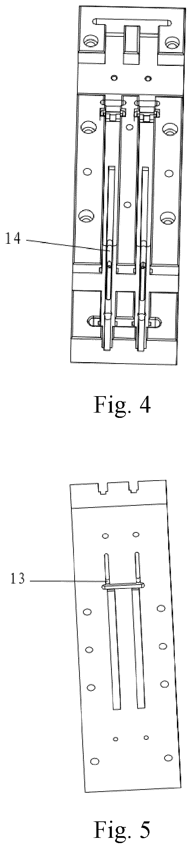

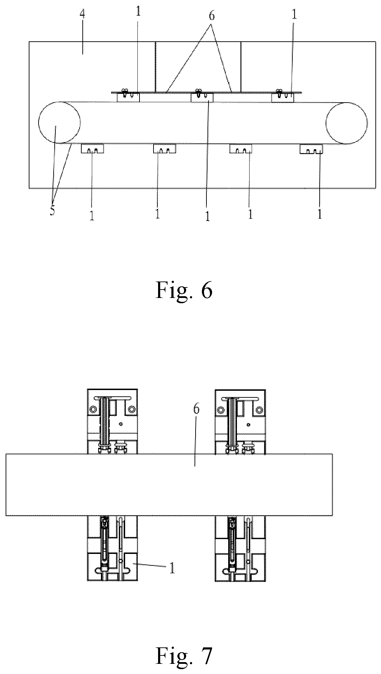

As shown in FIGs. 1 to 7, the disclosed conveying device includes a body 4 and a limit seat body 1, with the body 4 equipped with a conveying mechanism 5 for lateral movement of the limit seat body 1. The upper end of the limit seat body 1 is recessed with forward and backward guiding slots 11, with a rear stop part 12 positioned at the rear end of these slots to prevent backward movement of the rear workpiece 101 positioned above it. At the front end of the guiding slots 11, a connecting mechanism 2 is attached, allowing a movable stop component 3 to swing between the front upper side and the rear lower side around a horizontal axis 21 and to return to the front upper side. The limit seat body 1 has a first limit wall 13 to limit the forward upper movement and a second limit wall 14 to limit the rearward lower movement of the movable stop component 3. The movable stop component 3 can block the forward movement of the internal part/component 1021 of the front workpiece 102 located at the front end of the guiding slots 11. When the movable stop component 3 swings from the front upper side to the rear lower side, it does not obstruct the rearward movement of itself or the internal part/component 1021. The body 4 is connected with an upper stop component 6 positioned above the travel path of the limit seat body 1 to hinder movement between the front and rear ends of the guiding slots 11. The upper end of the limit seat body 1 is further concave with a front left and right avoidance groove 15 intersecting with the front and rear guide grooves 11, and a rear left and right avoidance groove 16 intersecting with the front and rear guide grooves 11.

As stated, during specific use, the front workpiece 102 can pass the upper stop component 6 before being pushed towards the rear workpiece 101 by an external power mechanism, such as a cylinder, for insertion into the rear workpiece 101.

As stated, the structure of the conveying device is simple and easy to implement. The conveying mechanism on the body 4 facilitates lateral movement of the limit seat body 1, thereby moving the workpieces laterally; the forward and backward guiding slots 11 and the rear stop part 12 on the limit seat body 1 facilitate forward and rearward guidance and rear positioning, such as when the front workpiece 102 is inserted into the rear workpiece 101, enhancing practicality. The setup of the movable stop component 3 and the first and second limit walls 13, 14 allows the front workpiece 102 to be placed downward into the guiding slots 11 at the movable stop component 3, where the movable stop component 3 can block the forward movement of the internal part/component 1021 in the front workpiece 102, preventing it from moving forward. This setup, in conjunction with the upper stop component 6, helps better limit the front workpiece 102; additionally, the swing of the movable stop component 3 from the front upper side to the rear lower side does not hinder the rearward movement of itself and the internal part/component 1021, thereby facilitating unobstructed rearward movement of the front workpiece 102. The setting of the front left and right avoidance slots 15 and the rear left and right avoidance slots 16 facilitates the external mechanical arm to avoid the workpiece when clamping the front and rear guide slots 11.

As stated, during the process of pushing the front workpiece 102 into the rear workpiece 101, the invention may alternatively use an internal support mechanism to brace the internal part/component 1021 of the front workpiece 102 before proceeding with the pushing operation, to facilitate the entry of the internal part/component 1021 into the rear workpiece 101.

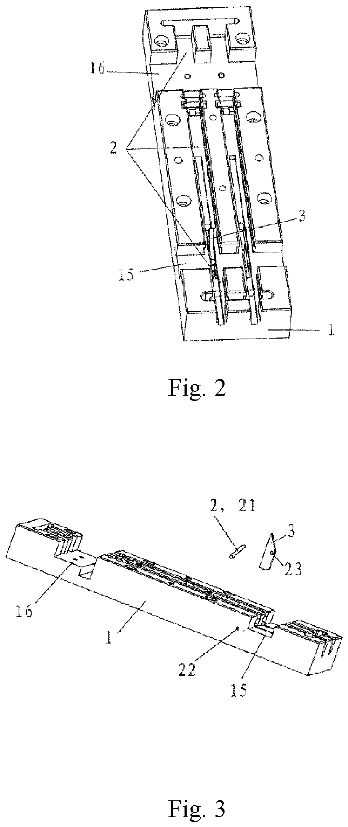

As shown in FIG. 3, the connecting mechanism 2 includes a first horizontal axle hole 22 set on the outer wall of the limit seat body 1, a second horizontal axle hole 23 on the outer wall of the movable stop component 3 corresponding to the position of the first horizontal axle hole 22, and a horizontal axle body 21 that passes through the first and second horizontal axle holes 22, 23 to swing-connect the movable stop component 3 at the front end of the guiding slots 11. This arrangement is easy to implement.

As stated, during specific implementation, the center of gravity of the movable stop component 3 allows it to reset to the forward upper swinging position, or the connecting mechanism 2 includes a torsion spring to drive the movable stop component 3 to reset to the forward upper position. This arrangement is easy to implement.

As stated, during specific implementation, the conveying mechanism 5 is a vertical cyclic conveying mechanism, with several limit seat bodies 1 fixed on it.

As stated, the invention protects a conveying device, and all technical solutions that are the same or similar to this case should be considered to fall within the scope of protection of this case.

## Claims

1. A conveying device, comprising a body (4) and a limit seat body (1). The body (4) is equipped with a conveying mechanism (5) for lateral movement of the limit seat body (1). The upper end of the limit seat body (1) is recessed with forward and backward guiding slots (11). The rear end of these slots (11) has a rear stop part (12) to prevent rearward movement of the rear workpiece (101) positioned above it. At the front end of the guiding slots (11), a connecting mechanism (2) is attached, which allows a movable stop component (3) to swing back and forth between the front upper side and the rear lower side around a horizontal axis (21) and to return to the front upper side. The limit seat body (1) has a first limit wall (13) to limit the forward upper movement and a second limit wall (14) to limit the rearward lower movement of the movable stop component (3). The movable stop component (3) can block the forward movement of the internal part/component (1021) of the front workpiece (102) located at the front end of the guiding slots (11). When the movable stop component (3) swings from the front upper side to the rear lower side, it does not obstruct the rearward movement of itself or the internal part/component (1021). The body (4) is connected with an upper stop component (6) positioned above the travel path of the limit seat body (1) to hinder movement between the front and rear ends of the guiding slots (11). The upper end of the limit seat body (1) is further concave with a front left and right avoidance groove (15) intersecting with the front and rear guide grooves (11), and a rear left and right avoidance groove (16) intersecting with the front and rear guide grooves (11).

2. The conveying device according to claim 1, wherein the conveying device according to claim 1 the connecting mechanism (2) includes a first horizontal axle hole (22) on the outer wall of the limit seat body (1) and a corresponding second horizontal axle hole (23) on the outer wall of the movable stop component (3). The horizontal axis (21) passes through these axle holes to swing-connect the movable stop component (3) at the front end of the guiding slots (11).

3. The conveying device according to claim 1, wherein the center of gravity of the movable stop component (3) allows it to return to the forward upper swinging position, or the connecting mechanism (2) includes a torsion spring for driving the movable stop component (3) to reset to the forward upper position.

4. The conveying device according to claim 1, wherein the conveying mechanism (5) is an up and down circulating conveying mechanism, and the limit seat body (1) is fixed on several of the conveying mechanisms (5).
